(19) **Europäisches Patentamt / European Patent Office / Office européen des brevets**

(11) **EP 2 380 111 B1**

(12) **EUROPEAN PATENT SPECIFICATION**

(45) Date of publication and mention
of the grant of the patent:
**03.07.2013 Bulletin 2013/27**

(21) Application number: **09833678.7**

(22) Date of filing: **27.11.2009**

(51) Int Cl.:
*G06K 9/00* (2006.01)     *G06K 9/46* (2006.01)

(86) International application number:
**PCT/NO2009/000409**

(87) International publication number:
**WO 2010/071443 (24.06.2010 Gazette 2010/25)**

(54) **METHOD FOR SPEEDING UP FACE DETECTION**

VERFAHREN ZUR BESCHLEUNIGUNG EINER GESICHTSERKENNUNG

PROCÉDÉ D'ACCÉLÉRATION DE DÉTECTION DE VISAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **19.12.2008 NO 20085322**

(43) Date of publication of application:
**26.10.2011 Bulletin 2011/43**

(73) Proprietor: **Cisco Systems International Sarl
1180 Rolle (CH)**

(72) Inventor: **HUSØY, Per, Ove
N-1087 Oslo (NO)**

(74) Representative: **Kazi, Ilya et al
Mathys & Squire LLP
120 Holborn
London EC1N 2SQ (GB)**

(56) References cited:
**EP-A1- 1 950 688     US-A1- 2004 017 930**

- YOO T-W ET AL: "A fast algorithm for tracking human faces based on chromatic histograms", PATTERN RECOGNITION LETTERS, ELSEVIER, AMSTERDAM, NL, vol. 20, no. 10, 1 October 1999 (1999-10-01), pages 967-978, XP004490730, ISSN: 0167-8655, DOI: 10.1016/S0167-8655(99)00053-7
- HUNKE M ET AL: "Face locating and tracking for human-computer interaction", 31 October 1994 (1994-10-31), SIGNALS, SYSTEMS AND COMPUTERS, 1994. 1994 CONFERENCE RECORD OF THE TW ENTY-EIGHTH ASILOMAR CONFERENCE ON PACIFIC GROVE, CA, USA 31 OCT.-2 NOV. 1994, LOS ALAMITOS, CA, USA, IEEE COMPUT. SOC, US, PAGE(S) 1277 - 1281, XP010148783, ISBN: 978-0-8186-6405-2 * abstract * * section 2 System Structure *
- WANG J J ET AL: "Video analysis of human dynamics-a survey", REAL-TIME IMAGING, ACADEMIC PRESS LIMITED, GB, vol. 9, no. 5, 1 October 2003 (2003-10-01) , pages 320-345, XP004472531, ISSN: 1077-2014
- SCHIELE B. ET AL: 'GAZE TRACKING BASED ON FACE:COLOR' INTERNATIONAL WORKSHOP ON AUTOMATIC FACE-ANDGESTURE-RECOGNITION 26 June 1995, pages 344 - 349, XP008049138

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to a method and system for detecting one or more faces within a digital image.

### Background of the invention

Detection of faces or heads in images is a key ability in video conferencing systems and other video systems. Systems having video image capturing means (e.g. video cameras, video conferencing equipment, web cameras, etc.) facilitates functionality such as; optimum view definition (BestView), area targeting for focusing purposes (to ensure that the people in the video are in focus), color optimization (ensure correct face colors) and others.

Face detection typically requires the face detecting device (or logic) to examine/process thousands, if not millions, of candidate windows within one digital image in an effort to locate portion(s) of a video frame (or image) that probably contain a human face. Conventional techniques call for the image data within the candidate windows to be manipulated and examined in various different positions and/or scales. All of this processing can lead to slow detection speeds.

Several approaches exist for the detection of faces in images. One of the faster methods today, developed for single-frame analysis, is due to Viola and Jones [1], the so called cascaded classifier using Haar similar features. Viola and Jones use a series (termed a cascade) of trained classifiers [1]. These cascades are trained on large sets of images both with and without faces (termed positive and negative samples) and essentially learn distinguishing features of a face. When applied to an image (in this case a single frame from a video) each classifier from the cascade is applied to regions (or windows) of the image, where the size of the window increases for each iteration. In the original VJ method, the detector is based on local geometric features in a gray-level image of a scene; one typical classifier is dark eye-caves vs brighter surroundings, etc. However, VJ's original method only consider facial features for each window (or region) and need to process each region for facial features before it determines if it contains a face or not. This put a lot of processing load on the system as detailed analysis must be performed on an image, even in regions where e.g. color may suggests that no face may exist.

Therefore, there is a great need in the business to provide improved methods, apparatuses and/or systems that increase the detection speed. One way to do this is to quickly reduce the number of candidate windows that need to be processed and examined. The resulting speedup of face detection would be beneficial in a variety of computer and machine-based applications.

One known method of reducing the number of candidate windows that need to be processed and examined is to define a set of colors (face colors) presumed to be colors found in regions of the image representing a face. Thus, the face detection unit only needs to process and examine the parts of the image containing pixels having colors corresponding with the defined set of face colors. However, a lot of video systems, e.g. video conferencing equipment, are typically placed in a huge variety of different environments with very different illumination and lighting conditions. Video conferencing endpoints are often placed on desktops near windows (giving varied illumination even if the system remains stationary), in well and poorly lit meeting rooms, in large lecture halls, in conference rooms with skin toned furniture or walls, etc. Therefore, despite the value of the region color for classifying faces, the variability in measured skin-color between different illuminations is quite large, making it difficult to utilize. Additionally, in images containing skin colored walls or furniture the face detection logic would still spend time on large areas not containing faces. Therefore, it is impossible to know the actual color of skin in an image before a reliable face detection is achieved.

Article "A fast algorithm for tracking human faces based on chromatic histograms" by Yoo et al. discloses a fast algorithm for tracking human face regions in colour motion images. Article "Face locating and tracking for human-computer interaction" by Hunke et al. discloses a connectionist face tracker that manipulates camera orientation and zoom, to keep a person's face located at all times.

### Summary of the invention

It is an object of the present invention to provide a method and system for solving at least one of the above-mention problems in prior art.

The features defined in the independent claims enclosed characterise this method.

### Brief description of the drawings

In order to make the invention more readily understandable, the discussion that follows will refer to the accompanying drawings.

Figure 1 is a block diagram illustrating an exemplary system configuration to speed up face detection,

Figure 2 is an illustrative diagram depicting exemplary logic configured to speed up face detection, in accordance with certain implementations of the present invention,

Figure 3 shows an exemplary input image containing a face,

Figure 4 shows an exemplary Background histogram of the input image in figure 3,

Figure 5 shows an exemplary Motion color histogram in accordance with certain implementations of the present invention,

Figure 6 shows an exemplary ratio histogram in accordance with certain implementations of the present invention,

## Detailed description the invention

In the following, the present invention will be discussed by describing a preferred embodiment, and by referring to the accompanying drawings. However, people skilled in the art will realize other applications and modifications within the scope of the invention as defined in the enclosed independent claims.

The present invention provides a novel method that significantly increases the face detection speed by reducing the number of candidate windows that need to be processed and examined by more complex and/or time-consuming face detection processes. Further, the present invention provides a more robust face detection method that is more independent of lighting conditions, than prior art face detection methods.

A variety of face detection techniques are known and continue to be adapted and improved upon. It is beyond the scope of this description to provide an educational introduction to such well-known techniques. Thus, readers that are interested in learning more are directed to the following exemplary references:

● [1] P. Viola and M. Jones. "Robust real time object detection". IEEE ICCV Workshop on Statistical and Computational Theories of Vision, Vancouver, Canada, Jul. 13, 2001.

● [2] A. Pentland, B. Moghaddam, and T. Starner. "View-based and Modular Eigenspaces of Face Recognition". Proc. of IEEE Computer Soc. Conf. on Computer Vision and Pattern Recognition, pp. 84-91, June 1994. Seattle, Wash.

● [3] M. Bichsel and A. P. Pentland. "Human face recognition and the face image set's topology". CVGIP: Image Understanding, 59:254-261, 1994.

● [4] R. E. Schapire. "The boosting approach to machine learning: An overview". MSRI Workshop on Nonlinear Estimation and Classification, 2002.

● [5] T. Serre, et al. "Feature selection for face detection". AI Memo 1697, Massachusetts Institute of Technology, 2000.

● [6] V. N. Vapnik. Statistical Learning Theory. John Wiley and Sons, Inc., New York, 1998.

● [7] Y. Freund and R. E. Schapire. "A decision-theoretic generalization of on-line learning and an application to boosting". Journal of Computer and System Sciences, 55(1):119-139, August 1997. Skin Color Filtering to Speedup Face Detection

In a setting where a video (sequence of images or frames) is captured by a static camera (e.g. video conferencing, studio filming, web-cameras, etc.), information gathered over a sequence of frames may be used to improve face detection processes. Typically a region of an image containing motion or a region having a color similar to skin-color are good candidate regions for searching for a face. However, since the color of a face may vary in a captured video frame as a function of the illumination at the time and place the video frame was captured, the present invention relaxes the requirement of knowing "skin-color" to a requirement of knowing the color of regions in motion.

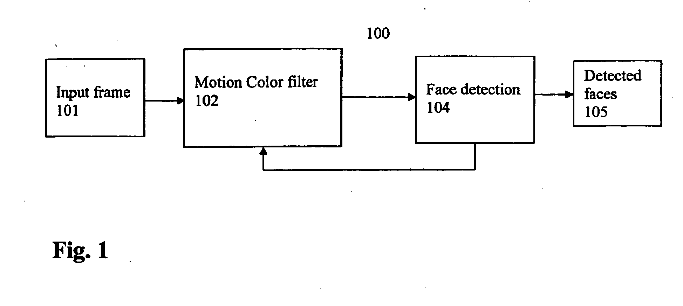

FIG. 1 depicts a flow chart of the basic technique implemented by the present invention. Block 101 is the first step shown in FIG. 1 wherein an actual input image of a sequence of images from a video stream in which a face is to be detected is provided to the system. Here, the input image is provided to a Motion Color filter 102. Input image includes, for example, raw digital image data. Motion Color filter 102 is configured to process the input image, and based on the input image output a set of corresponding processed images. The set of processed images at least comprise an image containing intensity information and an image containing probable skin color information. According to another embodiment of the invention, the set of processed images also comprise an image containing motion information. The processed images are then provided to or otherwise accessed by face detector 104. Note that in arrangement 100, Motion Color filter 102 is configured as a pre-filter. Motion Color filter 102 is described in greater detail in subsequent sections.

The face detector 104 according to the present invention may utilize different types of face detection methods, e.g. facial feature detectors, eigenvector (eigenfaces) based detectors etc. The present invention uses a face detector that employs at least features in a grayscale image (intensity information) and probable skin color information to classify candidate windows (or regions) as having face data or not having face data. The probable skin color information is information defining the regions of the frame that with high probability contains skin color, independent of the lighting conditions in which the video stream has been captured. According to another embodiment of the present invention, motion information which is information defining the regions of the frame that contains motion is used in addition to the intensity and probable skin color information to classify candidate windows.

Face detector 104 in this example is configured to output detected faces 105. Detected faces 105 may include, for example, specified portions of input image 101 that are likely to include face data. Face detector 104 is described in greater detail in subsequent sections.

The Motion & Color filter 102 may also be an integral part of the face detection logic, and not a separate step.

To examine if a face is located within input image, a very large number of candidate windows need to be examined at many different possible positions and/or many different scales. One of the more effective ways to accelerate face detection, therefore, is to quickly determine if a candidate window needs to be processed further, or if it can be disregarded. This is done in the face detector 104 by a classifier which allows background regions of the image to be quickly discarded while spending more computation on promising face-like regions. Unlike the approach described by Viola & Jones [1], which only uses Haar features in its classifier, the present invention describe a multi-modal classifier which utilizes several different features from several different derived input images to discard uninteresting regions of the image more rapidly. The main goal for Motion Color filter 102 is to provide the face detector 104 with information about which parts of the input image contain colors probable to be skin colors.

By way of example, in accordance with certain aspects of the present invention, the pixel color information of the input image includes red, green and blue color information (e.g., an RGB color space). However, this is not limiting to the scope of the present invention. A person skilled in the art could easily perform the same steps on an input image with pixel color information in other color spaces, e.g. including luminance and chrominance information (e.g., a YCrCb color space).

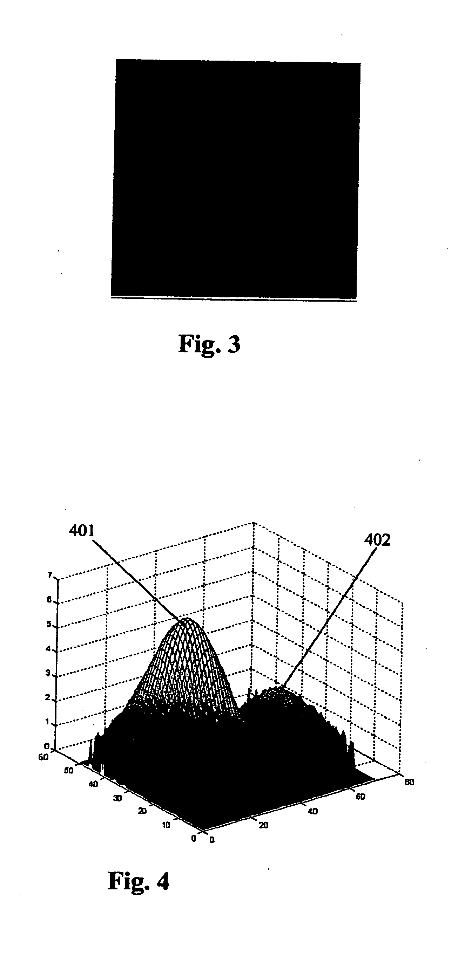

Figure 3 shows an exemplary input image 101, showing a scene with a face with skin color in front of a uniform background of different color.

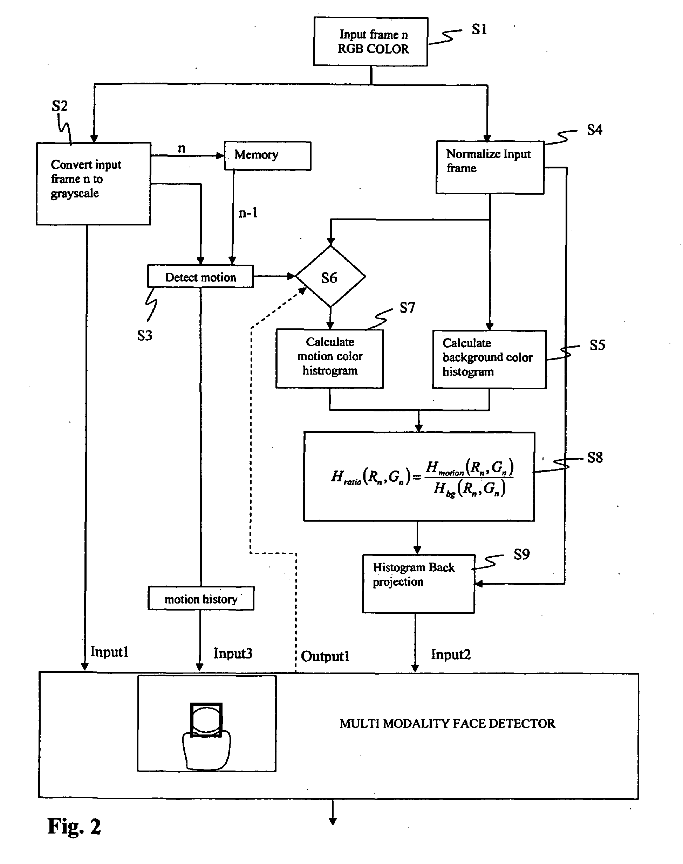

Referring to FIG. 2, which is a flow diagram depicting a method 200 according to one embodiment of the present invention, which can be implemented in Motion Color filter 102. In step S1, the face color filter 102 receives an digital input image 101 (frame of a video stream), e.g. the exemplary image shown in figure 3. A copy of the received input image is then converted S2 into a grayscale image, which is an image where the value of each pixel only carries intensity information. Images of this sort are composed exclusively of shades of gray, varying from black at the weakest intensity to white at the strongest. The grayscale image is temporarily stored in an internal memory device for later processing. The grayscale digital image is then used to detect motion S3 in the video stream. The detection process may be either a region based frame difference, or any approach which with reasonable sensitivity detects moving objects. Different conventional methods may be used to detect motion in a video signal, and one example of a simple algorithm for motion detection by a fixed camera is to compare the current image (n) with the previous image (n-1) and find the pixels (or blocks of pixels) in the current image (n) that are different from the corresponding pixels (or blocks of pixels) in the previous image (n-1). Therefore, in step S3 of the present invention, a motion image is generated, based on the current grayscale image and the previous grayscale image stored in the internal memory device. The motion image is a one-bit black and white digital image, having black pixels in areas with no detected motion and white pixels in areas with detected motion (or vica versa).

In step S3 a copy of the received input image (here a RGB image) is then converted into a normalized image in the RG chromaticity space. In the RG chromaticity space, a color is represented by the proportion of red, green and blue in the color, rather than by the intensity of each (as in a RGB color space). By normalizing the magnitude of the RGB pixel triplets (e.g. by calculating chromaticity), the image variations due to lighting geometry can be removed.

Next, in step S4 from the input image a normalized image is generated by computing an intensity insensitive color measure (Rn and Gn) for each pixel by dividing the element values of the original RGB vector by the sum of the element values. Since the sum of these measures add up to one, we can uniquely specify the color of any RGB triplet by a two element vector: The normalized [Rn,Gn] values. In a quantized form, the [Rn,Gn] then defines a pixel color by a two dimensional integer vector. The Rn and Gn values for each pixel in the normalized image 204 can be calculated according to the following equations:

$$Rn = \frac{255 * R}{R + B + G}, \quad Gn = \frac{255 * G}{R + B + G}$$

Where R, B and G is the element values of the Red, Blue and Green color respectively in the original RGB vector, and 255 is a scaling factor. As mention above, the Blue contribution is redundant because

$$Bn = 1 - Rn - Gn$$

For example, a pixel in a well lit face (or part of face) may be represented by the linear RGB vector [200, 120, 60], representing a typical skin color. While, a pixel in a dimly lit face (or another part of said first face), may be represented by the linear RGB vector [20,12,6], caused by shadows or poor illumination. However, even though the two pixels have different RGB vectors and technically represent two different colors, the two pixels represent the same skin color (or the same ratio of red green blue combination). This is reflected by the normalized RnGn values, here [134, 81], which is the same for both pixels.

Now, based on at least the motion image and the normalized image, three histograms are calculated; A Background Color Histogram, a Motion Color Histogram and a Motion Color Probability Histogram, the latter being a ratio of the Background Color Histogram and the Motion Color Histogram. A histogram is a standard statistical description of a distribution in terms of occurrence frequencies of different event classes; for color, the event classes are regions in color space.

First, in step S5, a color histogram is calculated for the normalized image, hereafter referred to as Background Color histogram since most of the image is assumed to contain "background". Since the normalized image is in a two dimensional color space (RG chromaticity), the Background Color histogram is a two-dimensional histogram and provides a compact summarization of the distribution of data in the normalized image. The Background Color histogram will now indicate how frequent each color occurs in the image, and will be used for normalization purposes.

$H(R_n,G_n)$= Number of pixels in normalized image with color Rn, Gn.

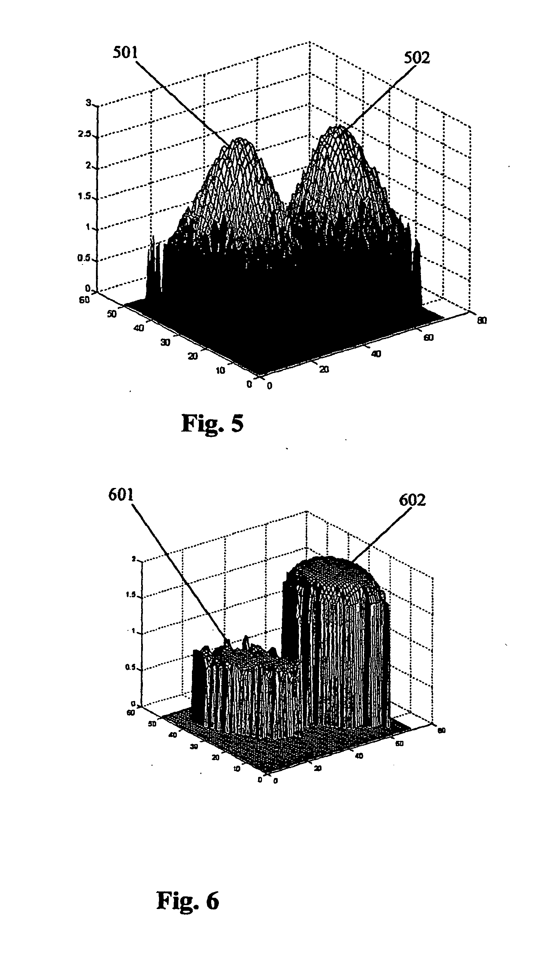

A Background color histogram calculated from the data in the exemplary input image in figure 3 is shown in figure 4. As we can see from figure 5 the background color occurs most frequent and has the largest peak 401. The peak 402 represents the face/skin colors.

Next, in step S6, according to one exemplary embodiment a Motion Color image is created. The Motion Color image is a combination of the motion image and the normalized image, which are two different representations of the same input image. The Motion Color image comprises only the pixels from the normalized image that are detected as being in motion in the motion image. Next, in step S7, a Motion Color histogram is calculated for the Motion Color image. Since all background (walls, furniture, ceiling, floor, etc) are stationary, and person rarely can remain completely still (even when actively trying), it is safe to assume that a motion detected in the image reflects the presence of a person. The Motion Color histogram is therefore created by calculating a color histogram for only the pixels in the normalized image which represent motion (pixels detected as motion based on a detection method as discussed above).

According to another exemplary embodiment of the present invention, a Motion color image is not created in step S6. Instead step S6 only defines a set of pixels in the normalized image that is to be used in step S7 when calculating the Motion Color histogram, based on information from the motion image. The motion image 203 contains information defining which pixels of the input image that are detected as being in motion, and the position of those pixels. Only the pixels at the same pixel positions in the normalized image are then used for creating the Motion Color histogram;

$H_{motion}(R_n,G_n)$=Number of pixels with normalized color Rn,Gn in only the parts of the normalized image detected as being in motion.

A Motion Color histogram computed based on the exemplary input image in figure 3 (and the motion image and normalized image derived there from) is shown in figure 6. As mentioned above, this histogram only includes pixels from regions containing motion. Changing lighting condition, swaying curtains, etc. may result in that truly static parts of the image are detected as being in motion. Further, moving body parts covered in clothing may contribute to non-skin colors in the Motion Color histogram. Thus, as we can see from figure 5 two peaks appear, corresponding to skin color 502 and background color 501 respectively. In contrast to the background color histogram, the background color and skin color occurs almost equally frequent and have quite similar peaks.

The Background Color histogram now gives the distribution of the colors in the overall scene, while the Motion Color histogram gives the distribution of the colors of the detected moving parts of the scene. A ratio histogram $H_{ratio}$ describes the relationship between the motion histogram $H_{motion}$ of the region containing motion and the Background Color histogram $H_{bg}$ of the entire normalized image. Therefore, next a ratio Histogram is computed in step S8, by dividing the Motion Color Histogram by the Background Color Histogram. Since the Background Color Histogram has high values for static background colors (they occupy most of the image) and low values for assumed skin colors (motion), the ratio Histogram will give low values for background colors and high values for colors in motion. The ratio histogram may be computed using the following formula;

$$H_{ratio}(R_n,G_n) = \frac{H_{motion}(R_n,G_n)}{H_{bg}(R_n,G_n)}$$

A ratio histogram computed based on the exemplary input image in figure 3 (and a background color histogram and a motion color histogram derived there from) is shown in figure 6. As can be seen from figure 6, the peak 602 (representing assumed skin colors) have considerably higher values than the rest of the colors 601 in the input image.

In step S9 a Motion color probability image is created by backprojection. The Motion Color Probability image is created by setting all pixel values in the motion color probability image to a value obtained by indexing the ratio histogram using values from the original normalized image. In other words, in step S9, the chromaticity values of each pixel in the Normalized input image are traced onto the ratio histogram, and the corresponding frequency value is assigned to the same pixel in the Normalized input image. This process produces bright pixels in the Motion color probability image where it is assumed that skin color appears, based on motion detection. In other words the Motion color probability image contains information about which parts of the image that is assumed to have skin colors.

According to one embodiment of the present invention the face detector 104 receives input data from Motion Color filter 102. As can be seen from figure 2, a first input Input1 is the grayscale digital image 202 providing image intensity information to the classifier for determining if an area of the image is probable to contain a face based on geometrical features, a second input Input2 is the motion color probability image providing information to the classifier for determining if the same area is likely to contain a face based on features in the Motion color probability image. The Motion Color probability image does not contain color, but contains an intensity measure for each pixel defining the probably that that a pixel is a skin color in the original input image 101. The classifier integrates over the region currently being examined and if the result is above a preset threshold, the area is assumed to contain a face candidate. If the result is below the preset threshold, the area is assumed not to contain a face, and the area is not examined further. All areas assumed to contain a face candidate is examined further for faces using traditional face recognition techniques based on the grayscale image.

According to another embodiment of the invention, the face detector 104 receives a third input input3 from Motion Color filter 102. The third input Input3 is the one bit motion image 202 providing information to the classifier for determining if the same area is probable to contain a face candidate based on features in the image. The motion image contains bright spots where motion was detected, and an examined area is likely to contain a face candidate if the area contains a certain amount of bright pixels. The classifier tests the area by integrating over the examined area, and if the result is higher than a preset threshold value it is probable that a face candidate is present in the examined area. If the result is lower than a preset threshold value, the classifier defines the examined area as not likely to comprise a face.

According to one embodiment of the invention, when face detector 104 detects a face in one of the input images the face detector 104 returns the location of the face to the Motion Color filter 102, e.g. in form of size of current test area and a pixel coordinate defining the position of the test area. The occurrence of an positive face detection will provide valuable information about which pixels in the image that actually comprise skin colors. Therefore, when detecting a face, the step of calculating the Motion color histogram in step S6 and S7 modified to calculating a Motion color histogram of only the pixels in the normalized image corresponding to the area representing a detected face.

The present invention is also described by a system comprising means for performing the method described above.

The invention makes it possible to utilize the power of color information to distinguish between objects based on their color without using a-priory knowledge about the specific color the object of interest. Instead of predefined skin color as a separating feature, the color of interest is found from motion analysis of the scene. Using variants of motion detection approaches, the statistics of the colors of moving objects, relative to the statistics of the colors of stationary objects is used to create a color sensitive feature which assists in separating moving from stationary objects. This moving object color feature is subsequently used as input into a object detection system, where the knowledge of motion is a strong cue.

In previous systems the explicit use of the skin color for face detection, the dependency of the registered color on the used illumination makes it difficult to make a robust detector.

## Claims

1. A method of detecting a face in a video stream comprising the steps of:

   - receiving (S1) from a static video camera a sequence of input color images and for each input image,

     - calculating (S2) a greyscale image of the input color image,
     - creating (S3) a one bit motion image based on the current greyscale image and a previous greyscale image,
     - calculating (S4) a normalized color image of the input color image,
     - calculating a motion color probability image by,
     - calculating (S5) a first color histogram of all the pixels in the normalized image,
     - calculating (S7) a second color histogram of only the pixels in the normalized image corresponding to pixels in the motion image defined as being in motion,
     - calculating (S8) a ratio histogram by dividing the second color histogram by the first color histogram,
     - setting (S9) all pixel values in the motion color probability image to a value obtained by indexing the ratio histogram using values from the original normalized image,

   - providing at least the grayscale image and the motion color probability image to a face detector,
   - executing face detection using a classifier that decides on the presence of a face based on first features in the grayscale image and second features in the motion color probability image.

2. A method according to claim 1, **characterized in that** the first features comprise geometrical features or patterns.

3. A method according to claim 1, **characterized in that** the second features comprise intensity information, said intensity information defining the presence of non-presence of assumed skin colors.

4. A method according to claim 1, **characterized in that** providing the motion image to the face detector, and that the present of a face is further based on third features in the motion image.

5. A method according to claim 1, **characterized in that** the input color image is in the RGB color space, and that said normalized image is created by converting a copy of the input color image to the RG chromaticity space.

6. A method according to claim 1, **characterized in that**, when the face detector detects a face in one of said input images, the step of calculating a motion color probability image is modified to:

   - extract the location of said detected face, and
   - calculating a second color histogram of only the pixels representing the detected face.

7. A system (100) comprising means (102) adapted for performing the method according to any one of claims 1 to 6.

**Patentansprüche**

1. Verfahren zum Erkennen eines Gesichts in einem Videostrom das die folgenden Schritte umfasst:

   Empfangen (S1) eine Sequenz von Eingangsfarbbildern von einer statischen Videokamera, und für jedes Eingangsbild
   Berechnen (S2) eines Graustufenbilds des Eingangsfarbbilds,
   Erzeugen (S3) eines Einbit-Bewegungsbilds basierend auf dem aktuellen Graustufenbild und einem vorherigen Graustufenbild,
   Berechnen (S4) eines normalisierten Farbbilds des Eingangsfarbbilds,
   Berechnen eines Bewegungswahrscheinlichkeitsfarbbilds durch
   Berechnen (S5) eines ersten Farbhistogramms aller Pixel in dem normalisierten Bild,
   Berechnen (S7) eines zweiten Farbhistogramms nur von den Pixeln in dem normalisierten Bild, die Pixeln in dem Bewegungsbild, die als in Bewegung befindlich definiert sind, entsprechen,
   Berechnen (S8) eines Verhältnishistogramms durch Dividieren des zweiten Farbhistogramms durch das erste Farbhistogramm,
Einstellen (S9) aller Pixelwerte in dem Bewegungswahrscheinlichkeitsfarbbild auf einen Wert, der durch Indizieren des Verhältnishistogramms erhalten wird, unter Verwendung der Werte von dem ursprünglichen normalisierten Bild,
Liefern wenigstens des Graustufenbilds und des Bewegungswahrscheinlichkeitsfarbbilds an einen Gesichtsdetektor,
Durchführen von Gesichtserkennung unter Verwendung eines Klassifizierers, der über das Vorhandensein eines Gesichts basierend auf ersten Merkmalen in dem Graustufenbild und zweiten Merkmalen in dem Bewegungswahrscheinlichkeitsfarbbild entscheidet.

2. Verfahren nach Anspruch 1, **dadurch gekennzeichnet, dass** die ersten Merkmale geometrische Merkmale oder Muster aufweisen.

3. Verfahren nach Anspruch 1, **dadurch gekennzeichnet, dass** die zweiten Merkmale Intensitätsinformationen aufweisen, wobei die Intensitätsinformationen das Vorhandensein oder Nichtvorhandensein angenommener Hautfarben definieren.

4. Verfahren nach Anspruch 1, **gekennzeichnet durch** das Liefern des Bewegungsbilds an den Gesichtsdetektor, und **dadurch**, dass das Vorhandensein eines Gesichts des Weiteren auf dritten Merkmalen in dem Bewegungsbild basiert.

5. Verfahren nach Anspruch 1, **dadurch gekennzeichnet, dass** das Eingangsfarbbild im RGB-Farbraum liegt, und dass das normalisierte Bild durch Konvertieren einer Kopie des Eingangsfarbbilds in den RG-Chromatizitätsraum erzeugt wird.

6. Verfahren nach Anspruch 1, **dadurch gekennzeichnet, dass**, wenn der Gesichtsdetektor ein Gesicht in einem der Eingangsbilder erkennt, der Schritt des Berechnens eines Bewegungswahrscheinlichkeitsfarbbilds modifiziert wird in:

   Extrahieren der Position des erkannten Gesichts, und
   Berechnen eines zweiten Farbhistogramms nur von den Pixeln, die das erkannte Gesicht repräsentieren.

7. System (100) mit Einrichtungen (102), die dazu ausgelegt sind, das Verfahren nach einem der Ansprüche 1 bis 6 durchzuführen.

## Revendications

1. Procédé de détection d'un visage dans un flux vidéo, comprenant les étapes suivantes :

   - la réception (S1) à partir d'une caméra vidéo statique d'une séquence d'images couleur d'entrée et pour chaque image d'entrée,
   - le calcul (S2) d'une image en niveaux de gris de l'image couleur d'entrée,
   - la création (S3) d'une image animée binaire sur la base de l'image en niveaux de gris actuelle et d'une image en niveaux de gris précédente,
   - le calcul (S4) d'une image couleur normalisée de l'image couleur d'entrée,
   - le calcul d'une image de probabilité de couleur animée au moyen
   - du calcul (S5) d'un premier histogramme couleur de l'ensemble des pixels sur l'image normalisée,
   - du calcul (S7) d'un second histogramme couleur des seuls pixels sur l'image normalisée correspondant aux pixels sur l'image animée définis comme étant en mouvement,
   - du calcul (S8) d'un histogramme de ratio en divisant le second histogramme couleur par le premier histogramme couleur,
   - du réglage (S9) de l'ensemble des valeurs de pixels sur l'image de probabilité de couleur animée sur une valeur obtenue en indexant l'histogramme de ratio au moyen des valeurs provenant de l'image normalisée d'origine,
   - la fourniture d'au moins l'image en niveaux de gris et l'image de probabilité de couleur animée à un détecteur de visage,
   - l'exécution de la détection de visage au moyen d'un classificateur qui décide de la présence d'un visage sur la base de premières caractéristiques sur l'image en niveaux de gris et de deuxièmes caractéristiques sur l'image de probabilité couleur animée.

2. Procédé selon la revendication 1, **caractérisé en ce que** les premières caractéristiques comprennent des caractéristiques ou motifs géométriques.

3. Procédé selon la revendication 1, **caractérisé en ce que** les deuxièmes caractéristiques comprennent des informations d'intensité, lesdites informations d'intensité définissant la présence ou non-présence de couleurs de peau par défaut.

4. Procédé selon la revendication 1, **caractérisé par** la fourniture de l'image animée au détecteur de visage, et en ce que la présence d'un visage est en outre basée sur des troisièmes caractéristiques de l'image animée.

5. Procédé selon la revendication 1, **caractérisé en ce que** l'image couleur d'entrée est dans l'espace couleur RVB, et **en ce que** ladite image normalisée est créée en convertissant une copie de l'image couleur d'entrée en l'espace de chromaticité RV.

6. Procédé selon la revendication 1, **caractérisé en ce que**, lorsque le détecteur de visage détecte un visage sur l'une desdites images d'entrée, l'étape de calcul d'une image de probabilité de couleur animée est modifiée pour

   - extraire l'emplacement dudit visage détecté, et
   - calculer un second histogramme couleur des seuls pixels représentant le visage détecté.

7. Système (100) comprenant des moyens (102) conçus pour réaliser le procédé selon l'une quelconque des revendications 1 à 6.

100

| Input frame 101 | → | Motion Color filter 102 | → | Face detection 104 | → | Detected faces 105 |

**Fig. 1**

Input frame n
RGB COLOR — S1

S2

Convert input frame n to grayscale

n → Memory

Normalize Input frame — S4

n-1

Detect motion

S6

S3

Calculate motion histrogram — S7

Calculate background color histogram — S5

$$H_{ratio}(R_n, G_n) = \frac{H_{motion}(R_n, G_n)}{H_{bg}(R_n, G_n)}$$ — S8

Histogram Back projection — S9

motion history

Input1    Input3    Output1    Input2

MULTI MODALITY FACE DETECTOR

**Fig. 2**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOO.** *A fast algorithm for tracking human faces based on chromatic histograms*
- **HUNKE.** *Face locating and tracking for human-computer interaction*
- **P. VIOLA ; M. JONES.** Robust real time object detection. *IEEE ICCV Workshop on Statistical and Computational Theories of Vision, Vancouver, Canada,* 13 July 2001
- **A. PENTLAND ; B. MOGHADDAM ; T. STARNER.** View-based and Modular Eigenspaces of Face Recognition. *Proc. of IEEE Computer Soc. Conf. on Computer Vision and Pattern Recognition,* June 1994, 84-91
- **M. BICHSEL ; A. P. PENTLAND.** Human face recognition and the face image set's topology. *CVGIP: Image Understanding,* 1994, vol. 59, 254-261
- **R. E. SCHAPIRE.** The boosting approach to machine learning: An overview. *MSRI Workshop on Nonlinear Estimation and Classification,* 2002
- **T. SERRE et al.** Feature selection for face detection. *AI Memo 1697, Massachusetts Institute of Technology,* 2000
- **V. N. VAPNIK.** Statistical Learning Theory. John Wiley and Sons, Inc, 1998
- **Y. FREUND ; R. E. SCHAPIRE.** A decision-theoretic generalization of on-line learning and an application to boosting. *Journal of Computer and System Sciences,* August 1997, vol. 55 (1), 119-139